# EUROPÄISCHE PATENTSCHRIFT

(11) **EP 3 501 257 B1**
(45) Veröffentlichungstag und Bekanntmachung des Hinweises auf die Patenterteilung: **05.08.2020**
(21) Anmeldenummer: 18000947.4
(22) Anmeldetag: 07.12.2018
(51) Int. Cl.: A01D 75/20, A01D 34/82

(54) **MÄHMASCHINE**
MOWING MACHINE
FAUCHEUSE

(30) Priorität: 21.12.2017 DE 202017006567 U
(43) Veröffentlichungstag der Anmeldung: 26.06.2019
(73) Patentinhaber: Maschinenfabrik Bernard Krone GmbH & Co. KG, 48480 Spelle (DE)
(72) Erfinder: Lömker, Jens, 48496 Hopsten (DE); Landwehr, Stefan, 49740 Haselünne (DE)

(56) Entgegenhaltungen:
- DE-A1- 2 730 146
- DE-T2- 69 307 556
- FR-A1- 2 222 603
- GB-A- 1 267 574

## Beschreibung

Die vorliegende Erfindung betrifft eine Mähmaschine zum Mähen von landwirtschaftlichem Halm- und Blattgut nach dem Oberbegriff des Schutzanspruches 1. Derartige Mähmaschinen sind aus dem Stand der Technik in vielfältigen Ausführungsformen bekannt und umfassen im Allgemeinen eine Mäherbaugruppe, die mit zumindest zwei umlaufend angetriebenen Schneidorganen bestückt sind, wobei jedes der Schneidorgane an der Außenperipherie zumindest zwei Schneidmesser aufweist. Zum Schutz gegen umherfliegende Steinpartikel oder dgl. ist die Mäherbaugruppe von einer Schutz- und Abdeckungsbaugruppe umgeben, die häufig aus einem oder mehreren Schutztuchelementen gebildet ist.

Aus der DE 693 07 556 T2 ist eine Mähmaschine bekannt geworden, bei der der Schneidmechanismus zum Abmähen des landwirtschaftlichen Halm- und Blattgutes von einem Schutzglied umgeben ist, welches aus einem oberen Teil und einem Frontteil besteht und vorzugsweise als Schutztuch ausgeführt ist. Insbesondere der obere Teil des Schutzgliedes wird dabei von einem starren Stützgestell getragen. Das Schutztuch liegt also ungespannt auf diesem Stützgestell auf. Aus dieser Tatsache heraus ergibt sich, dass das Schutztuch eine Oberfläche ausbildet, die bedingt durch die Auflage auf dem Stützgestell Mulden enthält, in denen sich Schmutz und Dreck ablagern kann.

Aufgabe der Erfindung ist es daher, eine Mähmaschine bereitzustellen, bei der die vorstehend beschriebenen Mängel vermieden werden.

Erfindungsgemäß wird diese Aufgabe durch die Merkmale des kennzeichnenden Teils des Anspruchs 1 gelöst. Vorteilhafte Weiterbildungen der Erfindung gehen aus den weiteren Ansprüchen hervor.

Nach der Erfindung wird dazu eine Mähmaschine zum Mähen von landwirtschaftlichem Halm- oder Blattgut mit zumindest zwei, um eine in etwa vertikal ausgerichtete Achse umlaufend angetriebenen Schneidorganen vorgeschlagen, die an ihrer Außenperipherie mit zumindest zwei Schneidmessern versehen sind und an einer in etwa quer zur Fahrt-und Arbeitsrichtung ausgerichteten Mäherbaugruppe gelagert sind, wobei die Mäherbaugruppe in der Arbeits- und Betriebsstellung über eine Rahmenbaugruppe gleitend über den Boden einer Feld- oder Wiesenfläche geführt wird und zumindest teilweise von einer, aus zumindest einem Schutztuchelement bestehenden Schutz- und Abdeckungsbaugruppe umgeben ist, wobei sich das zumindest eine Schutztuchelement in einer etwa horizontal ausgebildeten, oberhalb der Mäherbaugruppe befindlichen Ebene und einer vertikalen, nahezu bis zum Erdboden reichenden Ebene erstreckt und zur Umlenkung des zumindest einen Schutztuchelementes aus der etwa horizontalen Ebene in die vertikale Ebene ein Bügelelement vorgesehen ist, wobei das Bügelelement der Schutz- und Abdeckungsbaugruppe schwenkbeweglich an der Rahmenbaugruppe angelenkt ist und durch eine Schwenkbewegung des Bügelelementes eine das zumindest eine Schutztuchelement in der etwa horizontalen Ebene straffende Spannung aufbaubar ist.

Durch diese erfindungsgemäße Gestaltung wird erreicht, dass Schutztuchelemente einer Schutz- und Abdeckungsbaugruppe, die eine Mäherbaugruppe einer Mähmaschine umgeben und sich in einer etwa horizontalen Ebene oberhalb der Mäherbaugruppe erstrecken, in der Betriebsstellung so vorgespannt sind, dass diese eine absolut glatte Oberfläche ausbilden. Eine nachteilige Ansammlung von Schmutz- und Dreckpartikeln auf einer solchen Oberfläche ist damit wirkungsvoll vermieden. Nach der Erfindung ist es dazu vorgesehen, dass das zumindest eine Schutztuchelement einer Schutz- und Abdeckungsbaugruppe so mit einem schwenkbaren Bügelelement der Schutz- und Abdeckungsbaugruppe zusammenwirkt, dass auf den in einer etwa horizontalen Ebene sich erstreckenden Abschnitt des Schutztuchelementes eine straffende Spannung aufbringbar ist. Das bedeutet, dass der Abschnitt des Schutztuchelementes, der sich in der etwa horizontalen Ebene der Schutz- und Abdeckungsbaugruppe oberhalb der Mäherbaugruppe befindet, in der Betriebsstellung der Schutz- und Abdeckungsbaugruppe so stark gespannt ist, dass eine Muldenbildung sicher ausgeschlossen ist. Das schwenkbare Bügelelement der Schutz- und Abdeckungsbaugruppe kann dazu aus einer Wartungsstellung, in der das Schutztuchelement lose durchhängt, in eine Betriebsstellung überführt werden, in der der Abschnitt des Schutztuchelementes in der etwa horizontalen Ebene straff gespannt ist und das Bügelelement in einer Aussparung der Rahmenbaugruppe sicher arretiert ist. Das Schutztuchelement weist dazu eine Gestaltung auf, bei der ein Abschnitt des Schutztuchelementes um das Bügelelement herumgeführt ist, so dass dieser Abschnitt unterhalb des gespannten Schutztuchelementes durch die Kraft von Kraftspeichern in die gespannte Lage verbracht ist. Das Aufbringen der Spannkraft auf das Schutztuchelement kann dadurch noch verbessert werden, dass an dem um das Bügelelement herumgeführten Abschnitt des Schutztuchelementes zunächst eine Spannleiste angebracht ist, auf die dann die Kraft der Kraftspeicher einwirkt. Dadurch ergibt sich eine absolut gleichmäßige Einwirkung der Spannkraft auf das Schutztuchelement.

Eine vorteilhafte Ausführungsform der erfindungsgemäßen Schutz- und Abdeckungsbaugruppe der Mähmaschine ergibt sich dadurch, dass das Bügelelement mit seinen Schwenkarmen um eine Achse schwenkbar an der Rahmenbaugruppe angebracht ist, welche von der Anlenkung des Schutztuchelementes an der Rahmenbaugruppe beabstandet ist. Diese Gestaltungsweise führt bei einer Schwenkbewegung des Bügelelementes aus der Wartungsstellung in die Betriebsstellung dazu, dass sich der Abstand zwischen den Anlenkung des Schutztuchelementes an der Rahmenbaugruppe und dem Bügelelement vergrößert und damit als Folge der Umlenkung des Schutztuchelementes um das Bügelelement die als Zugfedern ausgeführten Kraftspeicher eine Spannung auf das Schutztuchelement aufbringen. Durch die Auswahl der Federkraft bzw. durch die Festlegung einer vorbestimmten Anzahl der verwendeten Federn kann die auf das Schutztuchelement aufgebrachte Spannkraft beeinflusst werden.

Vorzugsweise kann eine einfache Ausführungsform eines Schutztuchelementes so ausgestaltet sein, dass dieses einen Abschnitt aufweist, der zur Aufbringung der Spannkraft um das Bügelelement herumgeführt ist und einen weiteren Abschnitt enthält, welcher sich von dem Bügelelement in vertikaler Ausrichtung bis nahezu zum Erdboden erstreckt. Diese beiden Abschnitte können in vorteilhafter Weise mit dem Abschnitt des Schutztuchelementes verschweißt sein, das sich in einer etwa horizontalen Ausrichtung oberhalb von der Messerbaugruppe befindet.

Nachfolgend wird ein vorteilhaftes Ausführungsbeispiel der Erfindung anhand einer Zeichnung beschrieben. In der Zeichnung zeigt:
- Fig. 1:: eine perspektivische Darstellung einer erfindungsgemäßen Mähmaschine;
- Fig. 2:: eine vergrößerte Darstellung der Einzelheit A aus Fig. 1;
- Fig. 3:: eine perspektivische, teilweise abgebrochene Darstellung einer Schutz- und Abdeckungsbaugruppe der Mähmaschine aus Fig. 1 in einer Wartungsstellung;
- Fig. 4:: eine perspektivische, teilweise abgebrochene Darstellung einer Schutz- und Abdeckungsbaugruppe der Mähmaschine aus Fig. 1 in einer Betriebsstellung;

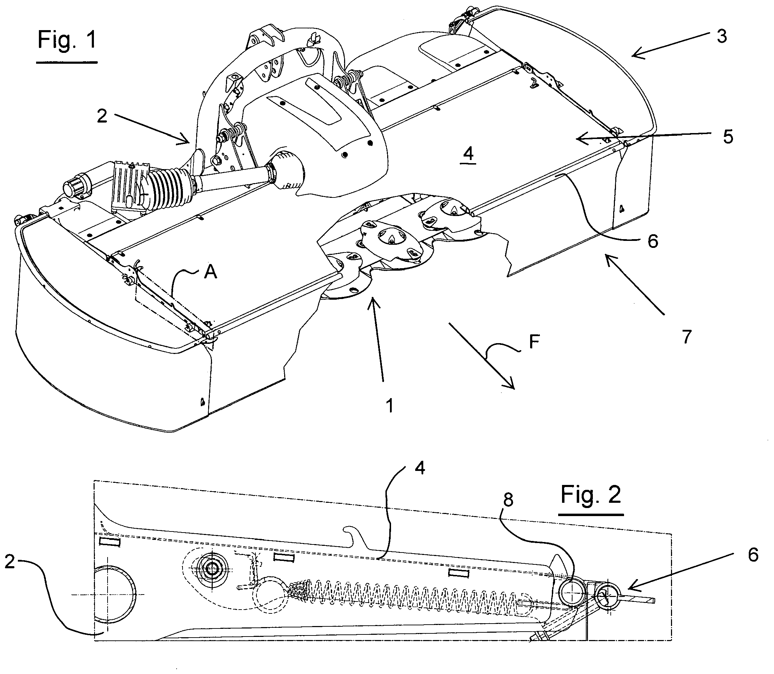

In Fig. 1 ist eine mögliche Ausführungsform einer Mähmaschine wiedergegeben. Hierbei handelt es sich um eine Mähmaschine, die im Frontanbau an ein landwirtschaftliches Trägerfahrzeug in der Art eines Traktors oder dgl. angebracht werden kann. Die Mähmaschine ist dabei aus einer Mäherbaugruppe 1 und einer Rahmenbaugruppe 2 aufgebaut. Die Rahmenbaugruppe 2 dient dabei auch als Träger für eine Schutz- und Abdeckungsbaugruppe 3, die die Mäherbaugruppe 1 umgibt. Wie aus dieser Fig. 1 weiterhin hervorgeht, umfasst die Schutz- und Abdeckungsbaugruppe 3 zumindest ein Schutztuchelement 4, welches sich oberhalb von der Mäherbaugruppe 1 in einer etwa horizontalen Ebene 5 erstreckt, bevor das Schutztuchelement 4 im Bereich der in Fahrt-und Arbeitsrichtung F vorlaufenden Außenkante 6 der Schutz- und Abdeckungsbaugruppe 3 von der in etwa horizontalen Ebene 5 in eine vertikale Ebene 7 umgelenkt wird. In dem dargestellten Ausführungsbeispiel enthält die Schutz- und Abdeckungsbaugruppe 3 ein Schutztuchelement 4. Vorstellbar sind jedoch ebenso andere Ausführungsformen mit mehreren Schutztuchelementen. Des Weiteren ist es auch denkbar, eine Schutz- und Abdeckungsbaugruppe mit den vorbeschriebenen Merkmalen auch an Mähmaschinen einzusetzen, die im Heckanbau an einem landwirtschaftlichen Trägerfahrzeug angebracht sind oder über ein der Mähmaschine zugeordnetes Fahrwerk als angehängte Mähmaschine über die Feld- oder Wiesenfläche bewegbar sind.

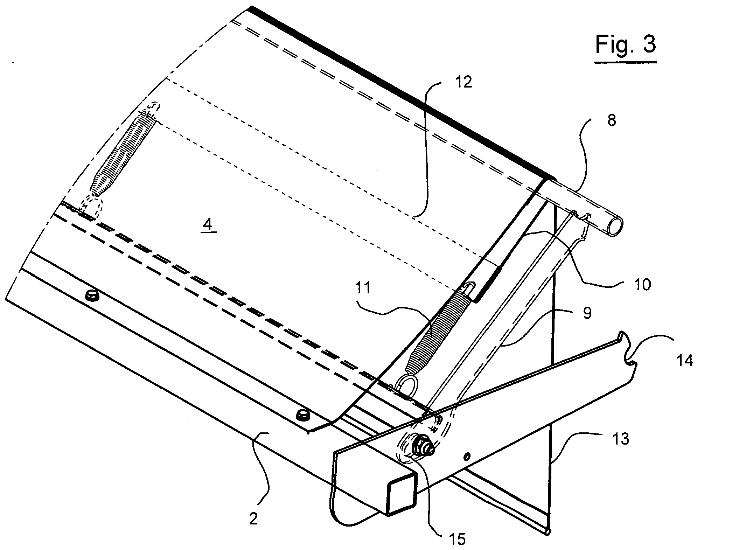

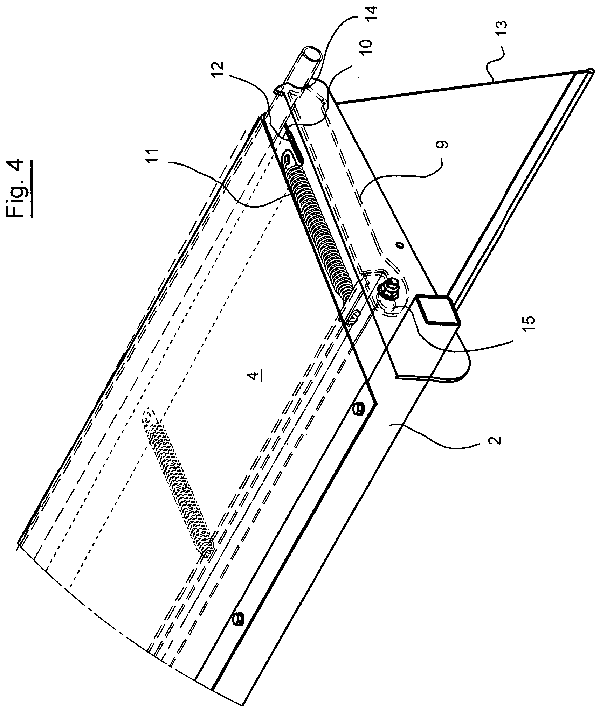

Wie aus den Fig. 2 bis 4 zu entnehmen ist, ergibt sich das Aufbringen einer Spannkraft auf den in etwa horizontalen Abschnitt des Schutztuchelementes 4 in erfindungsgemäßer Weise durch ein Bügelelement 8, welches über Schwenkarme 9 schwenkbar an der Rahmenbaugruppe 2 gelagert sind. Das Bügelelement mit seinen Schwenkarmen 9 kann dabei aus einer Wartungsstellung (Fig. 3) in eine Betriebsstellung (Fig. 4) verbracht werden. Aus der Fig. 3 und 4 geht weiterhin hervor, dass ein Abschnitt 10 des Schutztuchelementes 4 um das Bügelelement 8 herum geführt ist, so dass durch die Anbringung von Kraftspeichern 11 an diesen Abschnitt 10 des Schutztuchelementes 4 eine Spannkraft auf dieses aufgebracht wird. Damit diese Spannkraft absolut gleichmäßig auf das Schutztuchelement 4 einwirkt und nicht zu Verwerfungen innerhalb des Schutztuchelementes 4 führt, erfolgt das Aufbringen der Spannkraft über eine Spannleiste 12, die fest mit dem Abschnitt 10 des Schutztuchelementes 4 verbunden ist. Zur Abdeckung der Mäherbaugruppe 1 nach vorne hin (Fahrt- und Arbeitsrichtung F) weist das Schutztuchelement 4 einen weiteren Abschnitt 13 auf, der sich von dem Bügelelement 8 in der vertikalen Ebene 7 bis nahezu zum Erdboden erstreckt. Das Aufbringen der Spannkraft auf das Schutztuchelement 4 wird nun dadurch erreicht, dass das Bügelelement 8 mit seinen Schwenkarmen 9 aus der Wartungsstellung (Fig. 3) in die Betriebsstellung (Fig. 4) überführt wird. Das Bügelelement 8 liegt dann in der Betriebsstellung in einer Aussparung 14 der Rahmenbaugruppe 2 und wird als Folge der Kraft der Kraftspeicher 11 in dieser Aussparung 14 sicher arretiert. Als Kraftspeicher 11 können hier beispielsweise Zugfedern eingesetzt werden, wobei über die Auswahl der Federkraft bzw. durch die Festlegung der Anzahl der verwendeten Federn die aufgebrachte Spannkraft beeinflusst werden kann. Die Nutzung dieser vorteilhaften Arretierung des Federbügels 8 in der Aussparung 14 wird jedoch erst dadurch möglich, dass die Schwenkarme 9 in einem Langloch 15 der Rahmenbaugruppe 2 aufgenommen und gelagert sind.

## Patentansprüche

1. Mähmaschine zum Mähen von landwirtschaftlichem Halm- oder Blattgut mit zumindest zwei, um eine in etwa vertikal ausgerichtete Achse umlaufend angetriebenen Schneidorganen, die an ihrer Außenperipherie mit zumindest zwei Schneidmessern versehen sind und an einer in etwa quer zur Fahrt- und Arbeitsrichtung (F) ausgerichteten Mäherbaugruppe (1) gelagert sind, wobei die Mäherbaugruppe (1) in der Arbeits- und Betriebsstellung über eine Rahmenbaugruppe (2) gleitend über den Boden einer Feld- oder Wiesenfläche geführt wird und zumindest teilweise von einer, aus zumindest einem Schutztuchelement (4) bestehenden Schutz- und Abdeckungsbaugruppe (3) umgeben ist, wobei sich das zumindest eine Schutztuchelement (4) in einer etwa horizontal ausgebildeten, oberhalb der Mäherbaugruppe (1) befindlichen Ebene (5) und einer vertikalen, nahezu bis zum Erdboden reichenden Ebene (7) erstreckt und zur Umlenkung des zumindest einen Schutztuchelementes (4) aus der etwa horizontalen Ebene (5) in die vertikale Ebene (7) ein Bügelelement (8) vorgesehen ist, wobei das Bügelelement (8) der Schutz- und Abdeckungsbaugruppe (3) schwenkbeweglich an der Rahmenbaugruppe (2) angelenkt ist, **dadurch gekennzeichnet, dass** durch eine Schwenkbewegung des Bügelelementes (8) eine das zumindest eine Schutztuchelement (4) in der etwa horizontalen Ebene (5) straffende Spannung aufbaubar ist.

2. Mähmaschine nach Anspruch 1, **dadurch gekennzeichnet, dass** das Bügelelement (8) der Schutz- und Abdeckungsbaugruppe (3) schwenkbeweglich 1
aus einer Betriebsstellung, in der dieses an der Rahmenbaugruppe (3) in einer Aussparung (14) arretiert ist, in eine Wartungsstellung und zurück überführbar ist.

3. Mähmaschine nach Anspruch 1, **dadurch gekennzeichnet, dass** das zumindest eine Schutztuchelement (4) um das Bügelelement (8) herum geführt ist und dieser um das Bügelelement (8) herumgeführte Abschnitt (10) des Schutztuchelementes (4) mit zumindest einem Kraftspeicher (11) beaufschlagt ist.

4. Mähmaschine nach Anspruch 3, **dadurch gekennzeichnet, dass** das zumindest eine Schutztuchelement (4) um das Bügelelement (8) herum geführt ist und dieser um das Bügelelement herumgeführte Abschnitt (10) des Schutztuchelementes (4) über eine Spannleiste (12) mit zumindest einem Kraftspeicher (11) beaufschlagt ist.

5. Mähmaschine nach Anspruch 3 und 4, **dadurch gekennzeichnet, dass** als Kraftspeicher (11) eine Zugfeder vorgesehen ist.

6. Mähmaschine nach zumindest einem der Ansprüche 1 bis 5, **dadurch gekennzeichnet, dass** das zumindest einen Schutztuchelement (4) im Umlenkbereich um das Bügelelement (8) aus einem Abschnitt (10), der um das Bügelelement (8) herum geführt ist, und einem Abschnitt (13) besteht, welcher sich in der vertikalen Ebene (7) bis nahezu zum Erdboden erstreckt.

7. Mähmaschine nach zumindest einem der Ansprüche 1 bis 6, **dadurch gekennzeichnet, dass** die Anlenkung des zumindest einen Schutztuchelementes (4) an die Rahmenbaugruppe (3) sowie die Anlenkung von Schwenkarmen (9) des Bügelelementes (8) an der Rahmenbaugruppe (3) voneinander beabstandet sind.

8. Mähmaschine nach zumindest einem der Ansprüche 1 bis 7, **dadurch gekennzeichnet, dass** für den Front- oder Heckanbau an ein landwirtschaftliches Trägerfahrzeug ausgebildet ist.

## Claims

1. Mower for mowing agricultural stalk or leaf material, comprising at least two cutting elements which are driven so as to rotate about an approximately vertically oriented axis, are provided on their outer periphery with at least two cutting blades, and are mounted on a mower assembly (1) that is oriented approximately transversely to the driving and working direction (F), the mower assembly (1), in the working and operating position, being guided so as to slide over the ground of a field or meadow area by means of a frame assembly (2) and being at least partially surrounded by a protection and cover assembly (3) consisting of at least one protective cloth element (4), the at least one protective cloth element (4) extending in an approximately horizontal plane (5) located above the mower assembly (1) and in a vertical plane (7) that reaches almost to the ground, and a bracket element (8) being provided for deflecting the at least one protective cloth element (4) from the approximately horizontal plane (5) into the vertical plane (7), the bracket element (8) of the protection and cover assembly (3) being pivotally articulated on the frame assembly (2), **characterised in that,** by means of a pivoting movement of the bracket element (8), tension can be built up which tightens the at least one protective cloth element (4) in the approximately horizontal plane (5).

2. Mower according to claim 1, **characterised In that** the bracket element (8) of the protection and cover assembly (3) can be transferred pivotally from an operating position, in which said element is locked to the frame assembly (3) in a recess (14), into a maintenance position and back.

3. Mower according to claim 1, **characterised in that** the at least one protective cloth element (4) is guided around the bracket element (8) and at least one force storing means (11) acts on this portion (10) of the protective cloth element (4) that is guided around the bracket element (6).

4. Mower according to claim 3, **characterised in that** the at least one protective cloth element (4) is guided around the bracket element (8) and at least one force storing means (11) acts, via a tensioning strip (12), on this portion (10) of the protective cloth element (4) that is guided around the bracket element.

5. Mower according to claim 3 and 4, **characterised in that** a tension spring is provided as the force storing means (11).

6. Mower according to at least one of claims 1 to 5, **characterised in that** the at least one protective cloth element (4), in the region of deflection around the bracket element (8), consists of a portion (10) which is guided around the bracket element (8) and a portion (13) which extends in the vertical plane (7) almost to the ground.

7. Mower according to at least one of claims 1 to 6, **characterised In that** the point of articulation of the at least one protective cloth element (4) on the frame assembly (3) and the point of articulation of pivoting arms (9) of the bracket element (8) on the frame assembly (3) are mutually spaced apart.

8. Mower according to at least one of claims 1 to 7, **characterised in that** said mower is designed for front or rear attachment to an agricultural carrier vehicle.

## Revendications

1. Faucheuse pour faucher des produits agricoles en tiges ou en feuilles comportant au moins deux organes de coupe entraînés en rotation autour d'axes sensiblement verticaux, dont la périphérie extérieure est munie d'au moins deux couteaux et montés sur un sous-ensemble de fauche (1) orienté sensiblement transversalement à la direction de circulation et de travail (F),
le sous-ensemble de fauche (1) étant conduit en position de travail et de fonctionnement par un sous-ensemble de châssis (2) en glissant sur le sol d'un champ ou d'une prairie, en étant entouré au moins partiellement par un sous-ensemble de protection et de couverture (3) composé d'au moins un élément de toile de protection (4),
l'élément de toile de protection (4) s'étendant dans un plan (5) sensiblement horizontal au-dessus du sous-ensemble de fauche (1), et dans un plan vertical (7) arrivant pratiquement jusqu'au sol, et un élément d'arceau (8) pour faire passer l'élément de toile de protection (4) du plan sensiblement horizontal (5) dans le plan vertical (7),
l'élément d'arceau (8) du sous-ensemble de protection et de couverture (3) étant articulé de manière pivotante sur le sous-ensemble de châssis (2),
faucheuse **caractérisée en ce que**
un mouvement de pivotement de l'élément d'arceau (8), développe une tension qui raidit au moins l'élément de toile de protection (4) dans le plan sensiblement horizontal (5).

2. Faucheuse selon la revendication 1,
**caractérisée en ce que**
l'élément d'arceau (8) du sous-ensemble de protection et de couverture (3) peut passer par un pivotement, d'une position de fonctionnement dans laquelle le sous-ensemble de châssis (3) est bloqué dans un évidement (14) à une position d'entretien et inversement.

3. Faucheuse selon la revendication 1,
**caractérisée en ce qu'**
au moins l'élément de toile de protection (4) passe autour de l'élément d'arceau (8) et le segment (10) de cet élément de toile de protection (4) passant autour de l'élément d'arceau (8) est sollicité par au moins un accumulateur de force (11).

4. Faucheuse selon la revendication 3,
**caractérisée en ce qu'**
au moins l'élément de toile de protection (4) est guidé autour de l'élément d'arceau (8) et le segment (10) de l'élément de toile de protection (4) passant autour de l'élément d'arceau est sollicité par au moins un accumulateur de force (11) par l'intermédiaire d'une baguette de tension (12).

5. Faucheuse selon les revendications 3 et 4,
**caractérisée en ce que**
l'accumulateur de force (11) est un ressort de traction.

6. Faucheuse selon au moins l'une des revendications 1 à 5,
**caractérisée en ce qu'**
au moins l'élément de toile de protection (4) dans la zone de renvoi autour de l'élément d'arceau (8) se compose d'un segment (10) qui passe autour de l'élément d'arceau (8) et d'un segment (13) qui s'étend dans le plan vertical (7) pratiquement jusqu'au sol.

7. Faucheuse selon au moins l'une des revendications 1 à 6,
**caractérisée en ce que**
l'articulation reliant l'élément de toile de protection (4) au sous-ensemble de châssis (3) ainsi que l'articulation des bras pivotants (9) de l'élément d'arceau (8) au sous-ensemble de châssis (3) sont écartées les unes des autres.

8. Faucheuse selon au moins l'une des revendications 1 à 7,
**caractérisée en ce qu'**
elle est réalisée pour être montée à l'avant ou à l'arrière d'un tracteur à usage agricole.
